Europäisches Patentamt

European Patent Office

Office européen des brevets

(11) Veröffentlichungsnummer : **0 075 076**
**B1**

(12) # EUROPÄISCHE PATENTSCHRIFT

(45) Veröffentlichungstag der Patentschrift :
09.01.85

(51) Int. Cl.⁴ : **H 04 M 11/04**

(21) Anmeldenummer : **82105589.4**

(22) Anmeldetag : **25.06.82**

(54) Verfahren zur Übermittlung von Notrufen von hilfebedürftigen Personen.

(30) Priorität : **18.09.81 DE 3137147**

(43) Veröffentlichungstag der Anmeldung :
**30.03.83 Patentblatt 83/13**

(45) Bekanntmachung des Hinweises auf die Patenterteilung : **09.01.85 Patentblatt 85/02**

(84) Benannte Vertragsstaaten :
**AT BE CH DE FR GB LI LU NL SE**

(56) Entgegenhaltungen :
EP-A- 0 021 425
DE-A- 2 153 529
DE-C- 910 794
US-A- 3 213 200

(73) Patentinhaber : **ANT Nachrichtentechnik GmbH**
**Gerberstrasse 33**
**D-7150 Backnang (DE)**

(72) Erfinder : **Rupp, Dieter, Dipl.-Ing.**
**Bergäckerstrasse 13**
**D-7151 Allmersbach i.T. (DE)**
Erfinder : **Weeber, Wolfgang, Ing. grad.**
**Silvanerstrasse 7**
**D-7152 Aspach 4 (DE)**
Erfinder : **Lissner, Paul, Ing. grad.**
**Ludwigsburger Strasse 8**
**D-7150 Backnang 3 (DE)**
Erfinder : **Steimle, Josef, Ing. grad.**
**Akazienhain 10**
**D-7151 Allmersbach i.T. (DE)**

(74) Vertreter : **Schickle, Gerhard, Dipl.-Ing. et al**
**ANT Nachrichtentechnik GmbH Patent- und**
**Lizenzabteilung Gerberstrasse 33**
**D-7150 Backnang (DE)**

## Beschreibung

Die Erfindung betrifft ein Verfahren zur Übermittlung von Notrufen von hilfebedürftigen Personen nach dem Oberbegriff der Ansprüche 1 bis 3. Ein solches Verfahren ist aus der europäischen Offenlegungsschrift 21 425 bekannt. Dort wählt ein an eine Teilnehmerleitung eines Fernsprechwählvermittlungsnetzes angeschlossenes Notrufteilnehmergerät nach Betätigung eines Sensors durch die hilfebedürftige Person selbsttätig die Rufnummer einer ebenfalls an das Fernsprechwählvermittlungsnetz angeschlossenen Notrufzentrale. Über die so aufgebaute Verbindung findet eine bidirektionale Datenübertragung durch Frequenzumtastung innerhalb des Sprachbandes statt. Durch ein Betriebsart-Steuersignal von der Notrufzentrale kann eine Wechselsprecheinrichtung im Notrufteilnehmergerät wirksam geschaltet werden, wobei die Sprechrichtung durch ein Sprechrichtungs-Steuersignal umgeschaltet wird.

Dieses bekannte Verfahren hat den Nachteil, daß sich Daten- und Sprachübertragung gegenseitig stören, da die Signale beider Übertragungsarten über einen Summenverstärker und eine Gabelschaltung über dieselbe Fernsprechverbindung übertragen werden.

Die gleichzeitige Übertragung von Sprache und Daten über einen einzigen Kanal ohne gegenseitige Störung ist als sogenannte Überlagerungstelegrafie an sich bekannt und z. B. in dem Buch: « Hütte IV B, Fernmeldetechnik », 28. Auflage, Berlin und München 1962, Seite 730, beschrieben. Ihr Nachteil ist, daß wegen der Unterteilung des gesamten Bandes in einen Sprach- und einen Telegrafiekanal mittels Frequenzweichen die Sprachverständlichkeit und die Datenübertragungsgeschwindigkeit geringer sind als wenn jeweils die volle Bandbreite zur Verfügung stünde.

Aufgabe der Erfindung ist es, ein Verfahren zur Übermittlung von Notrufen von hilfebedürftigen Personen der eingangs genannten Art anzugeben, bei dem bei der Sprachübertragung eine gute Verständlichkeit und bei der Datenübertragung eine hohe Übertragungssicherheit und -geschwindigkeit gewährleistet sind.

Diese Aufgabe wird durch ein Verfahren nach einem der Ansprüche 1, 2 oder 3 gelöst.

Das abwechslungsweise Übertragen von Sprache und Daten über dieselbe Fernsprechverbindung, wobei durch ein über die Fernsprechverbindung übertragenes Betriebsart-Steuersignal die Sprecheinrichtung unwirksam und das Datengerät wirksam geschaltet wird, ist an sich aus der deutschen Patentschrift 910 794 bekannt. Jedoch ist diese bekannte Anordnung zur Lösung der zuvor genannten Aufgabe nicht ohne weiteres geeignet.

Die erfindungsgemäßen Verfahren gestatten eine freizügige und aufwandgünstige Umschaltung zwischen Datenübertragung und Sprachübertragung und umgekehrt. Aufgrund der Ausbildung der Betriebsart-Steuersignale ergibt sich dabei eine sehr schnelle Umschaltung.

Ein weiterer Vorteil ist, daß ein Datenendgerät mit hoher Übertragungsgeschwindigkeit eingesetzt werden kann, so daß in kurzer Zeit eine Vielzahl von Meldungen und Befehlen in beiden Richtungen übertragen werden können. So können nach Betätigung des Sensors außer einer Kennung noch Daten über die Art des Notfalles vom Notrufteilnehmergerät zur Notrufzentrale übertragen werden.

In der Gegenrichtung können außer den Sprechrichtungs-Steuersignalen weitere Steuersignale übertragen werden, so daß durch die Bedienungsperson in der Notrufzentrale alle Funktionen innerhalb und außerhalb des Notrufteilnehmergerätes gesteuert werden können, die zur Abwicklung des Notrufes notwendig sind. Die Abwicklung des Notrufes ist dadurch auch möglich, wenn die hilfebedürftige Person nach Betätigung des Sensors keine weiteren Bedienungshandlungen mehr ausführen kann.

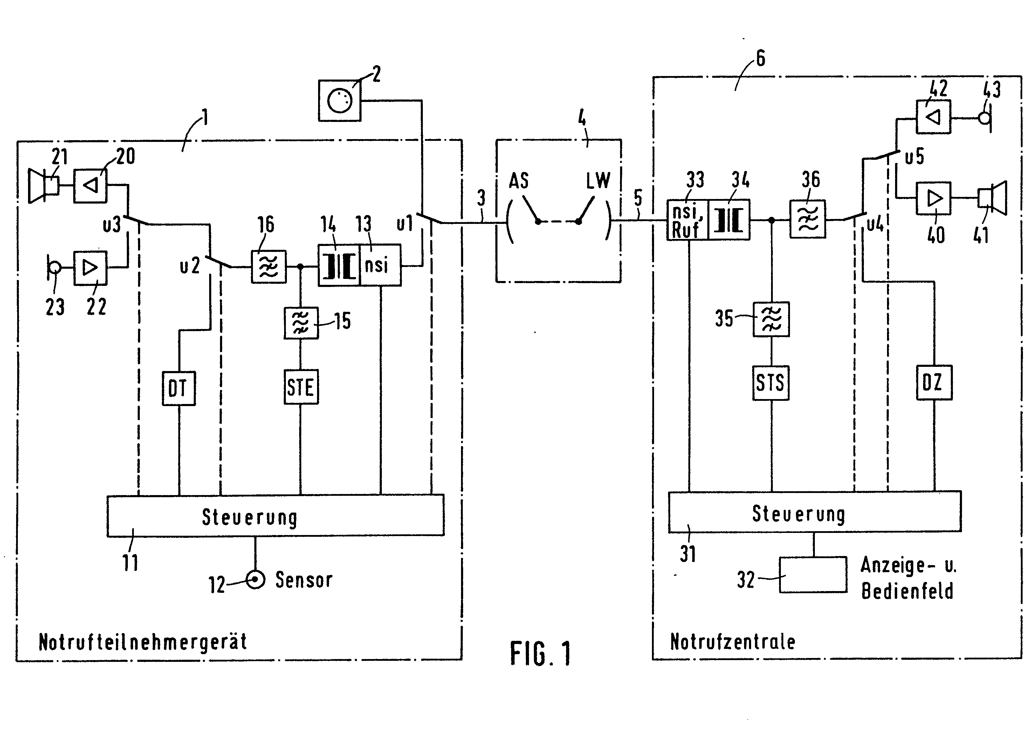

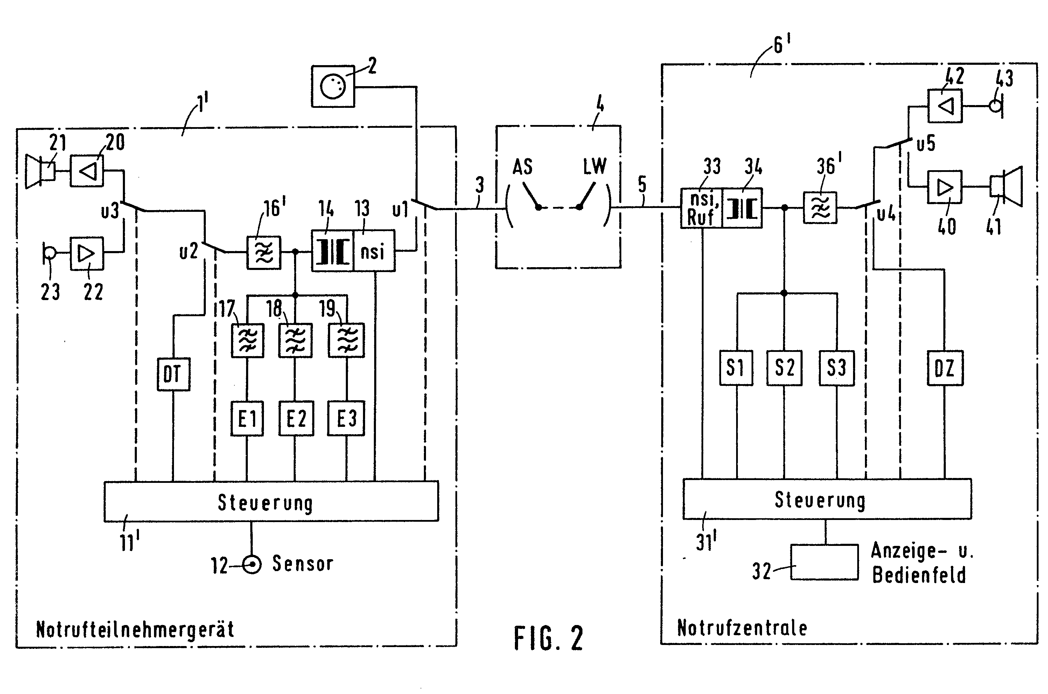

Die Erfindung wird nachstehend in der Weise beschrieben, daß zu jedem der Verfahren nach den Ansprüchen 1 bis 3 eine Schaltungsanordnung zur Durchführung des betreffenden Verfahrens anhand der Figuren 1 und 2 beschrieben wird, wobei die Figur 1 den Ansprüchen 1 und 2, die Figur 2 dem Anspruch 3 zugeordnet ist.

Es wird zunächst eine Schaltungsanordnung zur Durchführung des Verfahrens nach dem Anspruch 1 beschrieben. Sie besteht aus mehreren Notrufteilnehmergeräten, die über Teilnehmerleitungen an ein Fernsprechwählvermittlungsnetz 4 angeschlossen sind. In der Figur 1 ist nur ein Notrufteilnehmergerät 1 und die zugehörige Teilnehmerleitung 3 gezeichnet. Über eine weitere Teilnehmerleitung 5 ist eine Notrufzentrale 6 an das Fernsprechwählvermittlungsnetz 4 angeschlossen. Von den Wählern, aus denen das Fernsprechwählvermittlungsnetz aufgebaut ist, sind nur ein Anrufsucher AS und ein Leitungswähler LW angedeutet.

Alle Schaltmittel sind in ihrem Ruhezustand gezeichnet.

Das Notrufteilnehmergerät 1 enthält folgende Baugruppen:

a) eine Steuerung 11, an der ein Sensor 12 angeschlossen ist,
b) eine Wechselsprecheinrichtung, bestehend aus einem Lautsprecherverstärker 20, einem Lautsprecher 21, einem Mikrofonverstärker 22, einem Mikrofon 23 und einem von der Steuerung 11 betätigbaren Umschalter u3,
c) ein Datenendgerät DT,
d) einen Steuertonempfänger STE für den Steuerton mit einer Frequenz von 324 Hz,
e) einen Bandpaß 15 für die Frequenz von 324 Hz für den Steuerton,
f) eine Bandsperre 16, die die Frequenz von 324 Hz des Steuertones sperrt,

g) eine Leitungsbaugruppe 13, deren Funktionen (Schließen bzw. Öffnen der Teilnehmerschleife und Senden von Wahlimpulsen) von der Steuerung 11 steuerbar sind,

h) eine Übertragerbaugruppe 14 zur galvanischen Trennung zwischen Teilnehmerleitung 3 und dem Bandpaß 15 sowie der Bandsperre 16,

i) einen von der Steuerung 11 betätigbaren Umschalter u1 zum Umschalten der Teilnehmerleitung 3 von einem Fernsprechapparat 2 auf die Leitungsbaugruppe 13,

k) einen von der Steuerung 11 betätigbaren Umschalter u2 zum Unwirksamschalten der Wechselsprecheinrichtung und Wirksamschalten des Datenendgerätes DT.

Die Notrufzentrale 6 enthält folgende Baugruppen :

a) eine Steuerung 31 mit einem an ihr angeschlossenen Anzeige- und Bedienfeld 32,

b) eine Leitungsbauguppe 33. Sie besteht aus :

b1) einem Rufstromempfänger, der bei Erkennen des vom Leitungswähler LW ausgesandten Rufstromes ein entsprechendes Signal an die Steuerung 31 gibt.

b2) Schaltmitteln zum Schließen bzw. Öffnen der Teilnehmerschleife und Senden von Wahlimpulsen, wobei diese Funktionen von der Steuerung 31 steuerbar sind,

c) eine Übertragerbaugruppe 34 zur galvanischen Trennung der Teilnehmerleitung 5 von den nachfolgend aufgeführten Baugruppen,

d) ein Datenendgerät DZ,

e) einen von der Steuerung 31 wirksam steuerbaren Steuertonsender STS,

f) eine Wechselsprecheinrichtung, bestehend aus einem Lautsprecherverstärker 40, einem Lautsprecher 41, einem Mikrofonverstärker 42, einem Mikrofon 43 und einem von der Steuerung 31 betätigbaren Umschalter u5 zur Sprechrichtungsumkehr,

g) einen für die Frequenz des Steuertones von 324 Hz durchlässigen Bandpaß 35,

h) eine die Frequenz des Steuertones von 324 Hz sperrende Bandsperre 36,

i) ein von der Steuerung 31 betätigbarer Umschalter u4 zum Unwirksamschalten der Wechselsprecheinrichtung und Wirksamschalten des Datenendgerätes DZ.

Die von der Steuerung 11 bzw. 31 betätigbaren Umschalter u1 bis u5 sind als Relaiskontakte ausgeführt, wobei zu ihrer Betätigung die zugehörigen Wicklungen von der Steuerung 11 bzw. 31 erregbar sind.

Bei den Datenendgeräten DT und DZ handelt es sich um Geräte eines Fernwirksystemes, über das viele verschiedene Informationen (Befehle, Meldungen, Kennungen, Steuersignale usw.) durch unterschiedliche Impulstelegramme mittels Frequenzumtastung zwischen 1 300 Hz und 2 100 Hz innerhalb des Sprachbandes in beiden Richtungen zwischen der Notrufzentrale 6 und dem Notrufteilnehmergerät 1 übertragen werden können. Welche Information im Einzelfall übertragen werden soll, wird durch entsprechende Ansteuerung von Gleichstromeingängen der Datenendgeräte DT bzw. DZ durch die Steuerungen 11 bzw. 31 bestimmt. In der die Information empfangenden Station wird sie von Gleichstromausgängen der Datenendgeräte DT bzw. DZ an die Steuerung 11 bzw. 31 übertragen.

Im Ruhezustand ist über den Umschalter u1 des Notrufteilnehmergerätes 1 der Fernsprechapparat 2 über die Teilnehmerleitung 3 mit dem Fernsprechwählvermittlungssystem 4 verbunden, so daß von diesem Fernsprechapparat Gespräche geführt werden können wie von jedem anderen, an das Fernsprechvermittlungssystem 4 angeschlossenen Fernsprechapparat.

Im Notfall betätigt die hilfebedürftige Person den Sensor 12. Die Steuerung 11 schaltet daraufhin den Umschalter u1 um, wodurch die Teilnehmerleitung 3 vom Fernsprechapparat 2 ab- und an die Leitungsbaugruppe 13 angeschaltet wird. Dann veranlaßt die Steuerung 11 die Leitungsbaugruppe 13, die Teilnehmerschleife zu schließen. Dadurch wird im Fernsprechwählvermittlungsnetz 4 ein Anrufsucher und ein Gruppenwähler belegt. Anschließend wählt die Leitungsbaugruppe 13 die Rufnummer der Notrufzentrale 6. Der dadurch von einem Leitungswähler LW des Fernsprechwählvermittlungsnetzes ausgesendete Rufstrom gelangt über die Teilnehmerleitung 5 auf die Leitungsbaugruppe 33, die nach Erkennen des Rufstromes ein entsprechendes Signal an die Steuerung 31 gibt. Sie veranlaßt, daß die Leitungsbaugruppe 33 die Teilnehmerschleife schließt, wodurch im Leitungswähler LW der Rufstrom abgeschaltet und die Verbindung zwischen dem Notrufteilnehmergerät 1 und der Notrufzentrale 6 durchgeschaltet wird. Ferner versetzt die Steuerung 31 den Umschalter u4 in Arbeitsstellung, wodurch die Wechselsprecheinrichtung 40, 41, 42, 43 unwirksam und das Datenendgerät DZ wirksam geschaltet wird. Außerdem steuert die Steuerung 31 den Steuertonsender STS wirksam, so daß der von ihm ausgesandte Steuerton mit einer Frequenz von 324 Hz über den Bandpaß 35, die Übertragerbaugruppe 34, die Leitungsbaugruppe 33, die Teilnehmerleitung 5, das Fernsprechwählvermittlungsnetz 4, die Teilnehmerleitung 3, den Umschalter u1, die Leitungsbaugruppe 13, die Übertragerbaugruppe 14, den Bandpaß 15 in den Steuertonempfänger STE gelangt.

Der Steuertonempfänger gibt daraufhin ein Gleichstromsignal an die Steuerung 11, die den Umschalter u2 in Arbeitsstellung versetzt und so die Wechselsprecheinrichtung 20, 21, 22, 23 unwirksam und das Datenendgerät DT wirksam schaltet. Außerdem veranlaßt die Steuerung 11 das Datenendgerät DT, die Kennung des Notrufteilnehmergerätes auszusenden. Sind mehrere Sensoren vorhanden, wird auch eine Kennung des betreffenden Sensors ausgesendet. Auch die Übermittlung weiterer Informationen, z. B. medizinische Daten der hilfebedürftigen Person, kann vorgesehen sein. Die Kennung und gegebenenfalls weitere Informationen werden vom Datenendgerät DT über den Umschalter u2, die Bandsperre 16, die Übertragerbaugruppe 14, die Leitungsbaugruppe 13, den Umschalter u1, die Teilnehmerleitung 3, das Fernsprechwählvermittlungsnetz 4, die Teilnehmerleitung 5, die Leitungsbaugruppe 33, die Übertragerbaugruppe 34, die Bandsperre 36 und den Umschalter u4 zum Datenendgerät DZ übertragen, von da als Gleichstromsignale an die Steuerung 31 weitergegeben und auf dem Anzeige- und Bedienfeld 32 angezeigt. In umgekehrter Richtung können ebenfalls Informationen, z. B. eine Quittung, übertragen werden.

Eine Störung der Datenübertragung durch den gleichzeitig übertragenen Steuerton ist ausgeschlossen, da er wegen der Bandsperren 16 und 36 nicht an die Eingänge der Datenendgeräte DT und DZ gelangt. Durch die Bandsperren 16 und 36 wird der ursprünglich vorhandene Sprachkanal mit einer Bandbreite von 300 Hz bis 3 400 Hz auf 400 Hz bis 3 400 Hz begrenzt, so daß noch eine verhältnismäßig schnelle Datenübertragung mit einer Telegrafiergeschwindigkeit von 1 200 Bd möglich ist.

Will die Bedienungsperson mit der hilfebedürftigen Person sprechen, so wird nach entsprechender Tastenbetätigung am Anzeige- und Bedienfeld 32 das Datenendgerät DZ durch die Steuerung 31 veranlaßt, ein der gewünschten Sprechrichtung entsprechendes Sprechrichtungs-Steuersignal an das Datenendgerät DT zu senden. Über die Steuerung 11 wird damit der Umschalter u3 entsprechend betätigt. Die Steuerung 31 betätigt ferner entsprechend der gewünschten Sprechrichtung den Umschalter u5, versetzt nach der Übertragung des Sprechrichtungssteuersignales den Umschalter u4 wieder in die Ruhelage und schaltet den Steuertonsender STS wieder ab. Dadurch wird im Notrufteilnehmergerät 1 der Umschalter u2 wieder in die Ruhelage versetzt und so die Wechselsprecheinrichtung wirksam geschaltet. Dadurch ist die Sprechverbindung hergestellt.

Hierbei verhindern die Bandsperren 16 und 36 das Ansprechen des Steuertonempfängers STE auf zufällig in der Sprache enthaltene Frequenzen von 324 Hz. Durch die schon erwähnte Einigung der Bandbreite des Sprachbandes durch die Bandsperren 16 und 36 um nur 100 Hz auf 400 Hz bis 3 400 Hz wird die Verständlichkeit der Sprache nur unwesentlich verringert.

Soll die Sprechrichtung umgekehrt werden, so werden nach entsprechender Tastenbetätigung am Anzeige- und Bedienfeld durch Umschalten des Umschalters u4 in Arbeitsstellung, Wirksamschalten des Steuertonsenders STS und des damit bewirkten Umschalten des Umschalters u2 in Arbeitsstellung die Datenendgeräte DT und DZ wieder wirksam geschaltet, über sie das der neue Sprechrichtung entsprechende Sprechrichtungs-Steuersignal übertragen und so der Umschalter u3 in die entsprechende Lage versetzt. Der Umschalter u5 wird von der Steuerung 31 unmittelbar entsprechend betätigt. Nach Umschalten des Umschalters u4 und Abschalten des Steuertones besteht dann wieder Sprechverbindung.

Die zuvor beschriebene Sprechrichtungsumkehr ist beliebig oft möglich. Es ist ferner möglich, während eines Gespräches durch Aussenden des Steuertones auf Datenübertragung umzuschalten, um irgendwelche anderen Daten, Befehle, Meldungen oder Steuersignale zu übertragen. Wegen der hohen Telegraphiergeschwindigkeit wird dazu die Sprachübertragung um höchstens 200 ms unterbrochen, was noch nicht als störend empfunden wird.

Ist die Bedienungsperson ausreichend über den Notfall informiert, drückt sie am Anzeige- und Bedienfeld 32 eine Auslösetaste. Dadurch wird wieder durch Wirksamschalten des Steuertonsenders STS und Umschalten des Umschalters u4 in Arbeitsstellung von Sprache auf Datenübertragung umgeschaltet und dann von der Notrufzentrale an das Notrufteilnehmergerät ein Auslösebefehl übertragen. Dadurch wird über die Steuerung 11 die Leitungsbaugruppe 13 veranlaßt, die Teilnehmerschleife zu öffnen. Die Steuerung 31 veranlaßt die Leitungsbaugruppe 33, ebenfalls die Teilnehmerschleife zu öffnen. So wird die Fernsprechverbindung ausgelöst.

Eine Schaltungsanordnung zur Durchführung des Verfahrens nach dem Anspruch 2 weist die gleichen Baugruppen auf wie die Schaltungsanordnung, die den Anspruch 1 betrifft, wobei auch Übereinstimmung bei vielen Funktionen besteht. Unterschiede bestehen nur bei der Übertragung der Betriebsart-Steuersignale.

Bei der Schaltungsanordnung zur Durchführung des Verfahrens nach dem Anspruch 2 wird immer dann, wenn die Wechselsprecheinrichtung 20, 21, 22, 23 wirksam und das Datenendgerät DT unwirksam geschaltet werden soll, vom Datenendgerät DZ das erste Betriebsart-Steuersignal in der Form eines Impulstelegrammes an das Datenendgerät DT übertragen. Soll jedoch das Datenendgerät DT wirksam und die Wechselsprecheinrichtung 20, 21, 22, 23 unwirksam geschaltet werden, wird vom Steuertonsender STS das zweite Betriebsart-Steuersignal in der Form eines Steuertonimpulses an den Steuertonempfänger STE übertragen. Alle anderen Funktionen sind die gleichen wie bei der Schaltungsanordnung zur Durchführung des Verfahrens nach dem Anspruch 1.

Eine Schaltunganordnung zur Durchführung des Verfahrens nach dem Anspruch 3 wird anhand der Figur 2 beschrieben. Sie besteht ebenfalls aus mehreren Notrufteilnehmergeräten, die über Teilnehmerleitungen an ein Fernsprechwählvermittlungsnetz 4 angeschlossen sind. In der Figur 2 ist nur ein Notrufteilnehmergerät 1' und die zugehörige Teilnehmerleitung 3 gezeichnet. Über eine weitere Teilnehmerleitung 5 ist eine Notrufzentrale 6' an das Fernsprechwählvermittlungsnetz 4 angeschlossen.

Baugruppen, die die gleichen Funktionen aufweisen wie die entsprechenden Baugruppen der Figur 1, wurden mit gleichen Bezugszeichen bezeichnet. Wegen ihrer Beschreibung wird auf die betreffende Beschreibung der Figur 1 verwiesen.

Der Unterschied gegenüber der Figur 1 besteht darin, daß in Notrufteilnehmergerät 1' der Figur 2 drei Steuertonempfänger E1, E2, E3, vorgesehen sind, deren Gleichstrom-Ausgänge mit der Steuerung 11' verbunden sind. Jedem Steuertonempfänger ist einer der Bandpässe 17, 18 und 19 vorgeschaltet, wobei der Bandpaß 17 für die erste Tonfrequenz von 1 633 Hz, der Bandpaß 18 für die zweite Tonfrequenz von 697 Hz und der Bandpaß 19 für die dritte Tonfrequenz von 941 Hz durchlässig ist. Die Bandsperre 16' sperrt nur die erste Tonfrequenz von 1 633 Hz.

In der Notrufzentrale 6' sind dementsprechend drei von der Steuerung 31' wirksam steuerbare Steuerton-Sender S1, S2 und S3 vorgesehen, denen die drei Tonfrequenzen wie folgt zugeordnet sind :

S1 : 1 633 Hz,
S2 :   697 Hz,
S3 :   941 Hz.

Die Bandsperre 36' sperrt nur die Tonfrequenz von 1 633 Hz.

Bis auf die Übertragung der Betriebsart-Steuersignale besteht Übereinstimmung in den Funktionen zwischen den Schaltungsanordnungen nach den Figuren 1 und 2. Bei der Schaltungsanordnung nach der Figur 2 wird das erste Betriebsart-Steuersignal (welches das Datenendgerät DT unwirksam und die Wechselsprecheinrichtung 20, 21, 22, 23 wirksam schaltet) durch einen Steuertonimpuls, bestehend aus den Tonfrequenzen von 1 633 Hz und 697 Hz, gebildet. Das zweite Betriebsart-Steuersignal (um die Wechselsprecheinrichtung unwirksam und das Datenendgerät wirksam zu schalten) wird aus einem Steuertonimpuls, bestehend aus den Tonfrequenzen von 1 633 Hz und 941 Hz, gebildet.

Da die Bandsperren 16' und 36' nur die erste Tonfrequenz von 1 633 Hz aus den Nutzsignalen (Sprache bzw. Daten) ausfiltern, ist nur der Steuertonempfänger E1 gegen zufällig im Nutzsignal vorhandene, Steuertöne vortäuschende Frequenzen geschützt. Die Steuertonempfänger E2 und E3 können auf im Nutzsignal auftretende Frequenzen von 697 Hz bzw. 941 Hz ansprechen. Dies hat jedoch keine Wirkung, da die Steuerung 11' nur dann den Umschalter u2 betätigt, wenn der Steuertonempfänger E1 und einer der beiden Steuertonempfänger E2 und E3 angesprochen haben. Eine unerwünschte Umschaltung der Betriebsart durch im Nutzsignal auftretende, Steuertöne vortäuschende Frequenzen ist dadurch verhindert.

Für die aus dem Nutzsignal ausgefilterte Tonfrequenz wurde eine Frequenz gewählt, die im Sprachsignal nur mit geringer Amplitude auftritt. Dies ist bei höheren Frequenzen der Fall.

Das Ausfiltern einer nur mit geringer Amplitude auftretenden Frequenz hat den Vorteil, daß die Sprachverständlichkeit nur geringfügig vermindert wird.

Die Sicherheit gegen unerwünschtes Umschalten der Betriebsart durch im Nutzsignal enthaltene, Steuertöne vortäuschende Frequenzen kann durch eine Zeit- und Pegelauswertung erhöht werden. Ein Umschalten findet nur statt, wenn die betreffenden Steuertöne je mindestens 70 ms lang und mit nicht mehr als 4 dB Pegelunterschied empfangen werden. Die Auswertung des Pegelunterschiedes der zwei Tonfrequenzen anstelle ihrer absoluten Pegel hat den Vorteil, daß unterschiedliche Pegel infolge verschieden langer Teilnehmer- und anderer Leitungen nicht berücksichtigt werden müssen.

**Ansprüche**

1. Verfahren zur Übermittlung von Notrufen von hilfebedürftigen Personen, bei dem nach Betätigung eines Sensors (12) ein an eine Teilnehmerleitung (3) eines Fernsprechwählvermittlungsnetzes (4) angeschlossenes Notrufteilnehmergerät (1) selbsttätig die Rufnummer einer an das Fernsprechwählvermittlungsnetz (4) angeschlossenen Notrufzentrale (6) wählt und nach dem so bewirkten Aufbau einer Fernsprechverbindung (3, 4, 5) über diese eine Datenübertragung im Sprachband durch Frequenzumtastung zwischen der Notrufzentrale (6) und einem Datenendgerät (DT) im Notrufteilnehmergerät (1) stattfindet, sowie eine Sprechverbindung zwischen der hilfebedürftigen Person und einer Bedienungsperson der Notrufzentrale (6) über eine durch ein erstes Betriebsart-Steuersignal der Notrufzentrale (6) wirksam schaltbare Wechselsprecheinrichtung (20, 21, 22, 23, u3) des Notrufteilnehmergerätes (1) möglich ist, wobei die Sprechrichtungsumschaltung durch von der Notrufzentrale (6) gesendete Sprechrichtungs-Steuersignale gesteuert wird, wobei Betriebsart- und Sprechrichtungs-Steuersignale über die Fernsprechverbindung (3, 4, 5) übertragen werden, dadurch gekennzeichnet, daß Datenübertragung und Sprachübertragung abwechselnd stattfinden, wobei beim Wirksamschalten der Wechselsprecheinrichtung (20, 21, 22, 23, u3) das Datenendgerät (DT) unwirksam geschaltet wird und umgekehrt, daß das Datenendgerät (DT) durch ein zweites Betriebsart-Steuersignal wirksam geschaltet wird, daß das zweite Betriebsart-Steuersignal durch das Einschalten eines Steuertones und das erste Betriebsart-Steuersignal durch das Ausschalten des Steuertones gebildet wird und daß die Sprechrichtungs-Steuersignale über das Datenendgerät (DT) übertragen werden.

2. Verfahren zur Übermittlung von Notrufen von hilfebedürftigen Personen, bei dem nach Betätigung eines Sensors (12) ein an eine Teilnehmerleitung (3) eines Fernsprechwählvermittlungsnetzes (4) angeschlossenes Notrufteilnehmergerät (1) selbsttätig die Rufnummer einer an das Fernsprechwählvermittlungsnetz (4) angeschlossenen Notrufzentrale (6) wählt und nach dem so bewirkten Aufbau einer Fernsprechverbindung (3, 4, 5) über diese eine Datenübertragung im Sprachband durch Frequenzumtastung zwischen der Notrufzentrale (6) und einem Datenendgerät (DT) im Notrufteilnehmergerät (1) stattfindet, sowie eine Sprechverbindung zwischen der hilfebedürftigen Person und einer Bedienungsperson der Notrufzentrale (6) über eine durch ein erstes Betriebsart-Steuersignal der Notrufzentrale (6) wirksam schaltbare Wechselsprecheinrichtung (20, 21, 22, 23 u3) des Notrufteilnehmergerätes (1) möglich ist, wobei die Sprechrichtungsumschaltung durch von der Notrufzentrale (6) gesendete Sprechrichtungs-Steuersignale gesteuert wird, wobei Betriebsart- und Sprechrichtungs-Steuersignale über die Fernsprechverbindung (3, 4, 5) übertragen werden, dadurch gekennzeichnet, daß Datenübertragung und Sprachübertragung abwechselnd stattfinden, wobei beim Wirksamschalten der Wechselsprecheinrichtung (20, 21, 22, 23 u3) das Datenendgerät (DT) unwirksam geschaltet wird und umgekehrt, daß das Datenendgerät (DT) durch ein zweites Betriebsart-Steuersignal wirksam geschaltet wird, daß das erste Betriebsart-Steuersignal über das Datenendgerät (DT) übertragen wird, daß das zweite Betriebsart-Steuersignal als Steuerton-Impuls übertragen wird und daß die Sprechrichtungs-Steuersignale über das Datenendgerät (DT) übertragen werden.

3. Verfahren zur Übermittlung von Notrufen von hilfebedürftigen Personen, bei dem nach Betätigung eines Sensors (12) ein an eine Teilnehmerleitung (3) eines Fernsprechwählvermittlungsnetzes (4) angeschlossenes Notrufteilnehmergerät (1') selbsttätig die Rufnummer einer an das Fernsprechwählvermittlungsnetz (4) angeschlossenen Notrufzentrale (6') wählt und nach dem so bewirkten Aufbau einer Fernsprechverbindung (3, 4, 5) über diese eine Datenübertragung im Sprachband durch Frequenzumtastung zwischen der Notrufzentrale (6') und einem Datenendgerät (DT) im Notrufteilnehmergerät (1') stattfindet, sowie eine Sprechverbindung zwischen der hilfebedürftigen Person und einer Bedienungsperson der Notrufzentrale (6') über eine durch ein erstes Betriebsart-Steuersignal der Notrufzentrale (6') wirksam schaltbare Wechselsprecheinrichtung (20, 21, 22, 23, u3) des Notrufteilnehmergerätes (1') möglich ist, wobei die Sprechrichtungsumschaltung durch von der Notrufzentrale (6') gesendete Sprechrichtungs-Steuersignale gesteuert wird, wobei Betriebsart- und Sprechrichtungs-Steuersignale über die Fernsprechverbindung (3, 4, 5) übertragen werden, dadurch gekennzeichnet, daß Datenübertragung und Sprachübertragung abwechselnd stattfinden, wobei beim Wirksamschalten der Wechselsprecheinrichtung (20, 21, 22, 23, u3) das Datenendgerät (DT) unwirksam geschaltet wird und umgekehrt, daß das Datenendgerät (DT) durch ein zweites Betriebsart-Steuersignal wirksam geschaftet wird, daß die Betriebsart-Steuersignale aus einer Kombination von zwei Steuerton-Impulsen bestehen, wobei beim ersten Betriebsart-Steuersignal eine erste

und zweite Tonfrequenz und beim zweiten Betriebsart-Steuersignal die erste und eine dritte Tonfrequenz übertragen wird, und daß die Sprechrichtungs-Steuersignale über das Datenendgerät (DT) übertragen werden.

## Claims

1. Method for the forwarding of emergency calls from persons requiring assistance, in which method an emergency call subscriber set (1), which is connected to a subscriber line (3) of an automatic telephone exchange network (4), after actuation of a sensor (12) automatically selects the call number of an emergency call exchange (6) connected to the automatic telephone exchange network (4) and, after the thus effected build-up of a telephone connection (3, 4, 5), a data transmission takes place through this in the speech band through frequency shift keying between the emergency call exchange (6) and a data terminal device (DT) in the emergency call subscriber set (1) as well as a speech connection is possible between the person requiring assistance and an operating person of the emergency call exchange (6) by way of an alternate speech direction equipment (20, 21, 22, 23, u3), which is switchable to become effective by a first operating mode control signal of the emergency call exchange (6), of the emergency call subscriber set (1), wherein the switching-over of speech direction is controlled by speech direction control signals sent by the emergency call exchange (6) and the operational mode control signals and the speech direction control signals are transmitted by way of the telephone connection (3, 4, 5), characterised thereby, that data transmission and speech transmission take place in alternation, wherein the data terminal device (DT) is switched to become ineffective on the alternate speech direction equipment (20, 21, 22, 23, u3) being switched to become effective and vice versa, that the data terminal device (DT) is switched to become effective by a second operational mode control signal, that the second operational mode control signal is formed by the switching-on of a control tone and the first operational mode control signal is formed by the switching-off of the control tone and that the speech direction control signals are transmitted by way of the data terminal device (DT).

2. Method for the forwarding of emergency calls from persons requiring assistance, in which method an emergency call subscriber set (1), which is connected to a subscriber line (3) of an automatic telephone exchange network (4), after actuation of a sensor (12) automatically selects the call number of an emergency call exchange (6) connected to the automatic telephone exchange network (4) and, after the thus effected build-up of a telephone connection (3, 4, 5), a data transmission takes place through this in the speech band through frequency shift keying between the emergency call exchange (6) and a data terminal device (DT) in the emergency call subscriber set (1) as well as a speech connection is possible between the person requiring assistance and an operating person of the emergency call exchange (6) by way of an alternate speech direction equipment (20, 21, 22, 23, u3), which is switchable to become effective by a first operating mode control signal of the emergency call exchange (6), of the emergency call subscriber set (1), wherein the switching-over of speech direction is controlled by speech direction control signals sent by the emergency call exchange (6) and the operational mode control signals and the speech direction control signals are transmitted by way of the telephone connection (3, 4, 5), characterised thereby, that data transmission and speech transmission take place in alternation, wherein the data terminal device (DT) is switched to become ineffective on the alternate speech direction equipment (20, 21, 22, 23, u3) being switched to become effective and vice versa, that the data terminal device (DT) is switched to become effective by a second operational mode control signal, that the first operational mode control signal is transmitted by way of the data terminal device (DT), that the second operational mode control signal is transmitted as control tone pulse and that the speech direction control signals are transmitted by way of the data terminal device (DT).

3. Method for the forwarding of emergency calls from persons requiring assistance, in which method an emergency call subscriber set (1'), which is connected to a subscriber line (3) of an automatic telephone exchange network (4), after actuation of a sensor (12) automatically selects the call number of an emergency call exchange (6') connected to the automatic telephone exchange network (4) and, after the thus effected build-up of a telephone connection (3, 4, 5), a data transmission takes place through this in the speech band through frequency shift keying between the emergency call exchange (6') and a data terminal device (DT) in the emergency call subscriber set (1) as well as a speech connection is possible between the person requiring assistance and an operating person of the emergency call exchange (6') by way of an alternate speech direction equipment (20, 21, 22, 23, u3), which is switchable to become effective by a first operating mode control signal of the emergency call exchange (6'), of the emergency call subscriber set (1'), wherein the switching-over of speech direction is controlled by speech direction control signals sent by the emergency call exchange (6') and the operational mode control signals and the speech direction control signals are transmitted by way of the telephone connection (3, 4, 5), characterised thereby, that data transmission and speech transmission take place in alternation, wherein the data terminal device (DT) is switched to become ineffective on the alternate speech direction equipment (20, 21, 22, 23, u3) being switched to become effective and vice versa, that the data terminal device (DT) is switched to become effective by a second operational mode control signal, that the operational mode control signals consist of a combination of two control tone pulses, wherein a first and a second tone frequency are transmitted in the case of the first operational mode control signal and the first and a third tone frequency are transmitted in the case of the second operational mode control signal, and that the speech direction control signals are transmitted by way of the data terminal device (DT).

**Revendications**

1. Méthode pour la transmission d'appels d'urgence par des personnes ayant besoin d'assistance, dans laquelle, après manœuvre d'un détecteur (12), un appareil d'abonné aux appels d'urgence (1), relié à un réseau téléphonique à établissement de la communication par composition d'un numéro (4) compose automatiquement le numéro d'appel d'une centrale des appels d'urgence (6) reliée au réseau téléphonique à établissement de la communication par composition du numéro (4) ; et dans laquelle après établissement ainsi réalisé d'une liaison téléphonique (3, 4, 5) il se produit par celle-ci une transmission de données sur la bande vocale au moyen d'une manipulation par variation de fréquence entre la centrale des appels d'urgence (6) et un terminal de traitement des données (DT) de l'appareil (1) de l'abonné aux appels d'urgence ; et dans laquelle une liaison vocale est possible entre la personne ayant besoin d'assistance et un opérateur de la centrale des appels d'urgence (6) par l'intermédiaire d'une installation d'interphone (20, 21, 22, 23, u3) de l'appareil de l'abonné aux appels d'urgence (1) qu'un premier signal de commande de mode d'exploitation de la centrale des appels d'urgence (6) peut commuter dans l'état actif, étant précisé que la commutation du sens de passage de la liaison vocale est commandée par des signaux de commande du sens de passage de la liaison vocale envoyés par la centrale des appels d'urgence (6), étant précisé également que les signaux de commande de mode d'exploitation et de sens de passage de la liaison vocale sont transmis par la liaison téléphonique (3, 4, 5), caractérisée en ce que la transmission des données et la transmission de la parole ont lieu alternativement, étant précisé que lorsque l'installation d'interphone (20, 21, 22, 23, u3) est commutée dans l'état actif, le terminal de traitement des données (DT) est commuté dans l'état inactif et inversement ; en ce que le terminal de traitement des données (DT) est commuté dans l'état actif par un deuxième signal de commande de mode d'exploitation ; en ce que le deuxième signal de commande de mode d'exploitation est formé par la mise en circuit d'une tonalité de commande, et le premier signal de commande de mode d'exploitation par la mise hors circuit de la tonalité de commande ; et en ce que les signaux de commande du sens de passage de la liaison vocale sont transmis par l'intermédiaire du terminal de traitement des données (DT).

2. Méthode pour la transmission d'appels d'urgence par des personnes ayant besoin d'assistance, dans laquelle, après manœuvre d'un détecteur (12), un appareil d'abonné aux appels d'urgence (1), relié à un réseau téléphonique à établissement de la communication par composition d'un numéro (4) compose automatiquement le numéro d'appel d'une centrale des appels d'urgence (6) relié au réseau téléphonique à établissement de la communication par composition du numéro (4) ; et dans laquelle après établissement ainsi réalisé d'une liaison téléphonique (3, 4, 5) il se produit par celle-ci une transmission de données sur la bande vocale au moyen d'une manipulation par variation de fréquence entre la centrale des appels d'urgence (6) et un terminal de traitement des données (DT) de l'appareil (1) de l'abonné aux appels d'urgence ; et dans laquelle une liaison vocale est possible entre la personne ayant besoin d'assistance et un opérateur de la centrale des appels d'urgence (6) par l'intermédiaire d'une installation d'interphone (20, 21, 22, 23, u3) de l'appareil de l'abonné aux appels d'urgence (1) qu'un premier signal de commande de mode d'exploitation de la centrale des appels d'urgence (6) peut commuter dans l'état actif, étant précisé que la commutation du sens de passage de la liaison vocale est commandée par des signaux de commande du sens de passage de la liaison vocale envoyés par la centrale des appels d'urgence (6), étant précisé également que les signaux de commande de mode d'exploitation et de sens de passage de la liaison vocale sont transmis par la liaison téléphonique (3, 4, 5), caractérisée en ce que la transmission des données et la transmission de la parole ont lieu alternativement, étant précisé que lorsque l'installation d'interphone (20, 21, 22, 23, u3) est commutée dans l'état actif, le terminal de traitement des données (DT) est commutée dans l'état inactif et inversement ; en ce que le terminal de traitement des données (DT) est commuté dans l'état actif par un deuxième signal de commande d'exploitation ; en ce que le premier signal de commande de mode d'exploitation est transmis par l'intermédiaire du terminal de traitement des données (DT) ; en ce que le deuxième signal de commande de mode d'exploitation est transmis sous forme d'impulsion de tonalité des commandes ; et en ce que les signaux de commande du sens de passage de la liaison vocale sont transmis par l'intermédiaire du terminal.

3. Méthode pour la transmission d'appels d'urgence par des personnes ayant besoin d'assistance, dans laquelle après manœuvre d'un détecteur (12), un appareil d'abonné aux appels d'urgence (1'), relié à un réseau téléphonique à établissement de la communication par composition d'un numéro (4) compose automatiquement le numéro d'appel d'une centrale des appels d'urgence (6') relié au réseau téléphonique à établissement de la communication par composition du numéro 4 ; et dans laquelle après établissement ainsi réalisé d'une liaison téléphonique (3, 4, 5) il se produit par celle-ci une transmission de données sur la bande vocale au moyen d'une manipulation par variation de fréquence entre la centrale des appels d'urgence (6') et un terminal de traitement des données (DT) de l'appareil (1') de l'abonné aux appels d'urgence ; et dans laquelle une liaison vocale est possible entre la personne ayant besoin d'assistance et un opérateur de la centrale des appels d'urgence (6') par l'intermédiaire d'une installation d'interphone (20, 21, 22, 23, u3) de l'appareil de l'abonné aux appels d'urgence (1') qu'un premier signal de commande de mode d'exploitation de la centrale des appels d'urgence (6') peut commuter dans l'état actif, étant précisé que la commutation du sens de passage de la liaison vocale est commandée par des signaux de commande du sens de passage de la liaison vocale envoyés par la centrale des appels d'urgence (6'), étant précisé également que les signaux de commande de mode d'exploitation et de sens de passage de la liaison vocale sont transmis par la liaison téléphonique (3, 4, 5), caractérisée en ce que la transmission des données et la transmission de la parole ont lieu alternativement, étant précisé que lorsque l'installation d'interphone (20, 21, 22, 23, u3) est commutée dans l'état actif, le terminal de traitement des données (DT) est commutée dans l'état inactif et inversement ; en ce que le terminal de traitement des données (DT) est commuté dans l'état actif par un deuxième signal de commande d'exploitation ; en ce que les signaux de commande de mode d'exploitation sont constitués d'une combinaison de deux impulsions de tonalité de commande, étant précisé que dans le cas du premier signal de commande de mode d'exploitation, il est transmis une première fréquence de tonalité et une deuxième fréquence de tonalité et que dans le cas du deuxième signal de commande de mode d'exploitation, il est transmis la première fréquence de tonalité et une troisième fréquence de tonalité ; et en ce que les signaux de commande du sens de passage de la liaison vocale sont transmis par l'intermédiaire du terminal de traitement des données (DT).

FIG. 1

**Notrufzentrale**

Anzeige- u. Bedienfeld

Steuerung

nsi, Ruf'

STS

DZ

**Notrufteilnehmergerät**

Steuerung

Sensor

nsi

STE

DT

FIG. 2

Notrufzentrale

Anzeige- u. Bedienfeld

Steuerung

Notrufteilnehmergerät

Sensor

Steuerung